# EUROPÄISCHE PATENTSCHRIFT

(11) **EP 3 173 370 B1**
(45) Veröffentlichungstag und Bekanntmachung des Hinweises auf die Patenterteilung: **03.10.2018**
(21) Anmeldenummer: 16199640.0
(22) Anmeldetag: 18.11.2016
(51) Int. Cl.: B66F 9/075

(54) **VERFAHREN ZUR STEUERUNG EINES FLURFÖRDERZEUGS ÜBER EINE TRAGBARE FUNKBEDIENEINHEIT SOWIE EIN SOLCHES FLURFÖRDERZEUG**
METHOD FOR CONTROLLING AN INDUSTRIAL TRUCK VIA A PORTABLE RADIO CONTROL UNIT AND SUCH AN INDUSTRIAL TRUCK
PROCÉDÉ DE COMMANDE D'UN CHARIOT DE MANUTENTION PAR L'INTERMÉDIAIRE D'UNE UNITÉ DE COMMANDE RADIO PORTATIVE ET CHARIOT DE MANUTENTION

(30) Priorität: 27.11.2015 DE 102015120687
(43) Veröffentlichungstag der Anmeldung: 31.05.2017
(73) Patentinhaber: Jungheinrich Aktiengesellschaft, 22047 Hamburg (DE)
(72) Erfinder: Wetegrove, Ralf, 22850 Norderstedt (DE); Grabbe, Florian, 22335 Hamburg (DE); Knie, Andreas, 20255 Hamburg (DE)
(74) Vertreter: Hauck Patentanwaltspartnerschaft mbB

(56) Entgegenhaltungen:
- WO-A1-2013/149586
- WO-A1-2017/036750
- DE-A1- 19 855 605
- DE-A1-102008 025 632
- DE-A1-102009 052 079
- DE-U1-202014 003 675
- US-A1- 2014 343 758

## Beschreibung

Die vorliegende Erfindung betrifft ein Verfahren zur Steuerung eines Flurförderzeugs über eine tragbare und zum Senden von Signalen an eine Fahrzeugfunkeinheit ausgelegte Funkbedieneinheit. Die Erfindung betrifft ebenfalls ein Fahrzeug mit einer Fahrzeugfunkeinheit und einer tragbaren und zum Senden von Signalen an die Fahrzeugfunkeinheit ausgebildeten Funkbedieneinheit.

Die Verwendung von Funkbedieneinheiten bei Flurförderzeugen ist bekannt. Funkbedieneinheiten werden beispielsweise beim Kommissionierbetrieb mit Flurförderzeugen eingesetzt, um das Fahrzeug zu einem Aufnahmepunkt zu verfahren oder seine Höheneinstellung zu ändern. Auch andere Einsatzbereiche für Funkbedieneinheiten an Flurförderzeugen sind bekannt. Als nachteilig bei den bekannten Funkbedieneinheiten hat sich herausgestellt, dass deren Bedienung den Fahrzeugführer in seiner Bewegungsfreiheit und/oder bei seinen Bewegungsabläufen einschränkt. Selbst Funkbediensysteme, die in der Hand oder am Zeigefinder getragen und über den Daumen derselben Hand bedient werden können, schränken das Greifen mit der Hand ein und reißen den Benutzer aus seinem Bewegungsablauf heraus.

WO 2017/036750 A1 zählt zum Stand der Technik gemäß Art. 54(3) EPÜ und ist für die Frage der Neuheit zu berücksichtigen. Aus diesem Dokument ist ein Verfahren zum Steuern eine Flurförderzeuges bekannt geworden, bei dem eine Steuervorrichtung getrennt von dem Flurförderzeug an einem Arm einer Bedienperson des Flurförderzeugs anbringbar ist. Das Verfahren weist einen Schritt des Erfassens von Bewegungsdaten auf, zumindest eines definierten Bewegungsmusters der Steuervorrichtung. Dabei repräsentiert jedes vordefinierte Bewegungsmuster einen Steuerbefehl zum Steuern des Flurförderzeugs. Ein mögliches Bewegungsmuster ist hierbei ein zweimaliges Tippen auf die Steuervorrichtung.

Der Erfindung liegt die Aufgabe zugrunde, ein Verfahren zur Steuerung eines Flurförderzeugs und ein Flurförderzeug bereitzustellen, das über eine tragbare Funkbedieneinheit aus der Entfernung bedient werden kann, ohne dass der Fahrzeugführer in seiner Arbeit und/oder seinen Arbeitsabläufen eingeschränkt oder unterbrochen wird.

Die erfindungsgemäße Aufgabe wird erfindungsgemäß durch ein Verfahren mit den Merkmalen aus Anspruch 1 gelöst. Auch das Flurförderzeug mit den Merkmalen aus Anspruch 9 löst die der Erfindung zugrundeliegende Aufgabe.

Das erfindungsgemäße Verfahren ist vorgesehen und bestimmt zur Steuerung eines Flurförderzeugs über eine tragbare und zum Senden von Signalen an eine Fahrzeugfunkeinheit ausgelegte Funkbedieneinheit. Die Funkbedieneinheit weist eine Sendeeinheit, ein mit mindestens einer Bedienfläche ausgestattetes Gehäuse und einen in dem Gehäuse angeordneten Beschleunigungssensor auf. Bei dem Verfahren zur Steuerung des Flurförderzeugs sind folgende Verfahrensschritte vorgesehen: In einem ersten Verfahrensschritt wird ein Impulsübertrag auf die Bedienfläche erkannt. Der Impulsübertrag auf die Bedienfläche liegt vor und wird erkannt, wenn eine Beschleunigung ganz oder teilweise in einer Richtung von dem Beschleunigungssensor erfasst wird. Diese Richtung, in der die Beschleunigung erfasst wird, ist relativ zu dem Gehäuse der Funkbedieneinheit ausgerichtet. In einem weiteren Verfahrensschritt wird der erkannte Impulsübertrag als ein Signal an die Sendeeinheit der Funkbedieneinheit weitergeleitet. In einem nachfolgenden Schritt sendet die Sendeeinheit das weitergeleitete Signal an die bevorzugt feste Fahrzeugfunkeinheit. Wenn bei dem erfindungsgemäßen Verfahren von einem Signal gesprochen wird, bezieht sich dies stets auf ein Signal unabhängig von seiner Darstellung oder Codierung. Dies bedeutet, dass das an die Sendeeinheit weitergeleitete Signal eine andere Darstellung oder Codierung besitzen kann als das von der Sendeeinheit an die Fahrzeugfunkeinheit gesendete Signal. Mit dem erfindungsgemäßen Verfahren besteht die Möglichkeit, dass ein Fahrzeugführer durch einen oder mehrere Impulsüberträge auf die Bedienfläche zur Steuerung des Flurförderzeugs relevante Signale erzeugt und diese an das Flurförderzeug sendet. Der Impulsübertrag kann sehr einfach und schnell, beispielsweise durch Tippen oder leichtes Schlagen oder Klopfen auf die Bedienfläche, erfolgen, so dass die Bedienperson zur Erzeugung eines Steuersignals ihren Arbeitsvorgang nicht lange unterbrechen muss. Auch ist die Bedienung über einen Impulsübertrag sehr einfach möglich, denn die Bedienperson braucht nicht die Augen von ihrem aktuellen Tätigkeitsvorgang abzuwenden, um gezielt ein Signal an der Funkbedieneinheit zu erzeugen.

In einer möglichen Ausgestaltung besitzt der Beschleunigungssensor mindestens eine Messachse, in deren Richtungen eine Beschleunigung erfasst werden kann, wobei ein Impulsübertrag auf die Bedienfläche dann erkannt wird, wenn eine Amplitude der bekannten Beschleunigung ihr Vorzeichen wechselt. In der Regel werden Beschleunigungssensoren mit sechs Freiheitsgraden eingesetzt, die vorwärts- und rückwärtsgerichtete Beschleunigungen erfassen können. Die Stärke der Beschleunigung, aufgetragen über der Zeit, wird auch als Amplitude der Beschleunigung bezeichnet, da die von dem Beschleunigungssensor aufgezeichneten Werte einen schwingungsartigen Verlauf zeigen. Um einen Impulsübertrag auf die Bedienfläche von einer herkömmlichen Bewegung bzw. Beschleunigung der Funkbedieneinheit zu unterscheiden, ist vorgesehen, dass ein Vorzeichenwechsel der Amplitude vorhanden sein muss, um die erfassten Signale als einen Impulsübertrag auf die Bedienfläche zu qualifizieren.

Weiterhin hat sich als vorteilhaft herausgestellt, einen Impulsübertrag auf die Bedienfläche nur dann zu erkennen, wenn die Amplitude der erkannten Beschleunigung in mindestens einer Richtung der Messachse einen ersten vorbestimmten Mindestwert überschreitet. Hier reicht es aus, wenn der Mindestwert für die Beschleunigung in einer Richtung, also mit einem Vorzeichen, überschritten wird. Es kann auch vorgesehen sein, dass für die Signale mit positiven und negativen Vorzeichen jeweils ein Mindestwert vorgesehen ist, der Überschritten bzw. Unterschritten werden muss, um einen Impulsübertrag auf die Bedienfläche zu erkennen.

In einer bevorzugten Weiterbildung wird der Impulsübertrag auf die Bedienfläche erkannt, wenn die Amplitude in der Normalenrichtung der Bedienfläche einen zweiten vorbestimmten Mindestwert überschreitet. Bei dieser Weiterbildung wird also auf einen Beschleunigungswert in Normalenrichtung der Bedienfläche abgestellt. Bei einem Tippen oder Klopfen auf die Funkbedieneinheit bedeutet dies, dass der Impulsübertrag in Klopfrichtung bzw. senkrecht zur Bedienfläche ausgewertet wird.

In einer bevorzugten Weiterbildung der Erfindung wird ein Impulsübertrag auf die Bedienfläche nur dann erkannt, wenn die Amplitude in Normalenrichtung der Bedienfläche den zweiten Mindestwert überschreitet und die Amplitude in mindestens einer weiteren Richtung einen vorbestimmten dritten Minimalwert nicht überschreitet. Hierdurch kann festgestellt werden, dass der Impulsübertrag im Wesentlich in Normalenrichtung auf die Bedienfläche erfolgte und Anteile in Querrichtungen nicht zu stark sind. Beispielsweise kann der Aufprall einer herunterfallenden Funkbedieneinheit Beschleunigungswerte in mehrere Richtungen erzeugen, wobei deren Amplitude dann in diesen Richtungen auch den vorbestimmten dritten Minimalwert überschreitet, so dass der Aufprall nicht als ein Impulsübertrag auf die Bedienfläche gewertet wird.

In einer zweckmäßigen Weiterbildung wird bei einem einzelnen Impulsübertrag auf die Bedienfläche ein zugeordnetes Einzelsignal an die Fahrzeugfunkeinheit gesendet. In einer bevorzugten Weiterbildung wird zwei Impulsübertragen auf die Bedienfläche, die um weniger als eine vorbestimmte Zeitspannung auseinander liegen, ein Doppelsignal zugeordnet und an die Fahrzeugfunkeinheit gesendet. In dieser Weiterbildung des Verfahrens werden nicht zwei einzelne Impulsüberträge auf die Bedienfläche als zwei Einzelsignale an die Fahrzeugfunkeinheit gesendet, sondern wenn die Zeitspanne zwischen den beiden Impulsüberträgen klein genug ist, wird ein zugeordnetes Doppelsignal an die Fahrzeugfunkeinheit gesendet. In einer Weiterbildung dieses Ansatzes wird auch bei drei oder mehr Impulsüberträgen auf die Bedienfläche, wenn deren zeitlicher Abstand jeweils einen vorgegebenen Mindestabstand nicht überschreitet, ein zugeordnetes Triple-Signal oder ein Signal höherer Ordnung an die Fahrzeugfunkeinheit gesendet. Auch hier wird unterschieden, ob drei Einzelsignale erzeugt wurden oder aufgrund des geringen zeitlichen Abstands ein Triple-Signal vorliegt.

In einer bevorzugten Weiterbildung werden die empfangenen Signale der Funkbedieneinheit von der Fahrzeugfunkeinheit an eine Fahrzeugsteuerung weitergeleitet. Die Fahrzeugsteuerung setzt das empfangene Signal um, so dass beispielsweise einem Doppelsignal eine gewisse Funktion, beispielsweise das Verfahren des Fahrzeugs, zugeordnet wird.

Die erfindungsgemäße Aufgabe wird ebenfalls durch ein Flurförderzeug mit einer Fahrzeugfunkeinheit und einer tragbaren und zum Senden von Signalen an die Fahrzeugfunkeinheit ausgebildeten Funkbedieneinheit gelöst. Die Funkbedieneinheit weist eine Sendeeinheit, ein mit mindestens einer Bedienfläche ausgestattetes Gehäuse und einen Beschleunigungssensor auf, der mindestens eine Messachse besitzt, in deren Richtungen eine Beschleunigung sensiert werden kann. Der Beschleunigungssensor ist mit dem Gehäuse verbunden und ein Impulsübertrag auf die Bedienfläche bewirkt eine Beschleunigung ganz oder teilweise in Richtung der Messachse. Ein sensiertes Signal wird an die Sendeeinheit weitergeleitet und an die Fahrzeugfunkeinheit gesendet.

In einer bevorzugten Ausgestaltung liegt ein Impulsübertrag auf die Bedienfläche vor, wenn die Amplitude der Signale ihr Vorzeichen wechselt. Der Vorzeichenwechsel erlaubt es, sicher und zuverlässig eine Klopf-, Tipp- oder sonstige Berührung der Bedienfläche von willkürlichen Bewegungen oder Stößen zu unterscheiden. Bevorzugt ist in der tragbaren Funkbedieneinheit die Bedienfläche starr mit dem Gehäuse ausgebildet, so dass der Impulsübertrag auf die Bedienfläche zu einer Erschütterung des Gehäuses führt, die von dem Beschleunigungssensor gemessen wird.

In einer bevorzugten Weiterbildung erkennt der Beschleunigungssensor einen Impulsübertrag auf die Bedienfläche, wenn die Amplitude des Beschleunigungssensors in der Messachse einen vorbestimmten Minimalwert überschreitet. Dies bedeutet, dass die an dem Gehäuse erfolgte Erschütterung stark genug ist, um als Impulsübertrag auf die Bedienfläche gewertet zu werden.

In einer bevorzugten Ausgestaltung ist als Beschleunigungssensor ein dreidimensionaler Beschleunigungssensor für sechs Freiheitsgrade vorgesehen. Ein solcher Beschleunigungssensor wird fachsprachlich auch als 6-DoF-Sensor bezeichnet, wobei DoF für Degree of Freedom steht.

In einer zweckmäßigen Weiterbildung liegt ein Impulsübertrag auf die Bedienfläche vor, wenn die Amplitude in Normalenrichtung der Bedienfläche einen ersten vorbestimmten Mindestwert überschreitet. Der erste vorbestimmte Mindestwert ist dabei so hoch gesetzt, dass unbeabsichtigte Berührungen oder Stöße an der Funkbedieneinheit nicht als ein Impulsübertrag auf die Bedienfläche zur Erzeugung eines Steuersignals gewertet werden können.

In einer bevorzugten Weiterbildung wird ein Impulsübertrag auf die Bedienfläche dann erkannt, wenn die Amplitude in Normalenrichtung der Bedienfläche einen zweiten Mindestwert überschreitet und die Amplitude in mindestens einer weiteren Richtung kleiner als ein dritter Mindestwert ist. In einer bevorzugten Weiterbildung ist die Sendeeinheit dazu ausgebildet, um bei einem Impulsübertrag auf die Bedienfläche ein zugeordnetes Signal an die Fahrzeugfunkeinheit zu senden.

Die erfindungsgemäße Funkbedieneinheit ist ebenfalls dazu ausgebildet, einen Doppel-Impulsübertrag auf die Bedienfläche dann zu erkennen, wenn zwei Impulsüberträge auf die Bedienfläche um nicht mehr als eine vorbestimmte Zeitspanne auseinanderliegen. Die Sendeeinheit sendet bei einem Doppelimpulsübertrag ein zugeordnetes Signal an die Fahrzeugfunkeinheit. In einer bevorzugten Weiterbildung ist die Funkbedieneinheit mit einer Bedienfläche und mindestens einem Paar von Tastern ausgestattet. Zweckmäßigerweise sendet die Funkbedieneinheit ein zugeordnetes Funksignal, wenn beide Taster gleichzeitig betätigt sind. Durch die gleichzeitige Betätigung der Taster wird deren unbeabsichtigte Betätigung verhindert. In einer bevorzugten Ausgestaltung weist das Gehäuse zwei Flachseiten auf, wobei die Bedienfläche auf einer ersten Flachseite angeordnet ist. Die Verwendung einer Flachseite für die Bedienfläche erlaubt es, dass durch eine Tipp- oder Klopfbewegung auf die Bedienfläche ein Signal erzeugt werden kann.

Ferner ist auf der ersten Flachseite mindestens ein Taster vorgesehen, dessen Betätigungsweg und/oder Betätigungskraft derart bestimmt ist, dass ein Impulsübertrag auf die Bedienfläche kein unbeabsichtigtes Betätigen des Tasters bewirken kann.

Auch sind die Taster mit ihrer Betätigungskraft und/oder ihrem Betätigungsweg so ausgelegt, dass bei Drücken des Tasters kein Impulsübertrag auf die Bedienfläche erfolgt.

In einer bevorzugten Weiterbildung ist an dem Gehäuse ein Anschluss für einen elektrischen Steckverbinder vorgesehen. Der Anschluss kann beispielsweise zum Laden einer internen Batterie vorgesehen sein.

In einer bevorzugten Weiterbildung sendet die Funkbedieneinheit über ein Bluetooth-Protokoll Daten an die Fahrzeugfunkeinheit.

Ein bevorzugtes Ausführungsbeispiel wird anhand des nachfolgenden Ausführungsbeispiels näher erläutert. Es zeigen:
- Fig. 1: ein erfindungsgemäßes Flurförderzeug in einer Ansicht von der Seite mit einer schematisch dargestellten Funkbedieneinheit und
- Fig. 2: mehrere Ansichten für eine Funkbedieneinheit.

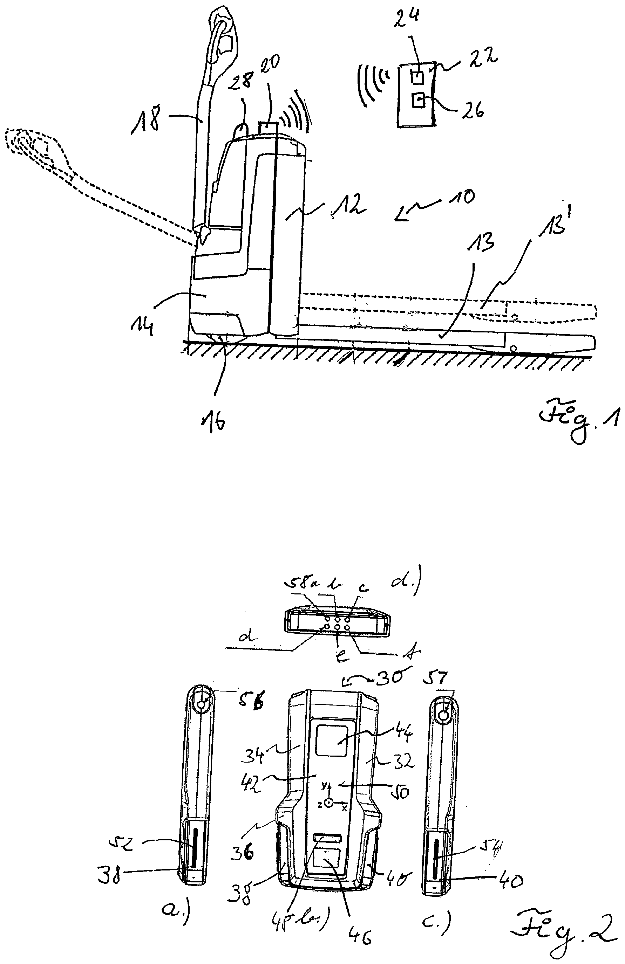

Fig. 1 zeigt in einer Ansicht von der Seite ein Niederhubfahrzeug 10, das ein Lastteil 12 und ein Antriebsteil 14 besitzt. Das Lastteil 12 besitzt zwei Lastarme 13, die in eine angehobene Position 13' gehoben werden können. Das Antriebsteil 14 besitzt ein gelenktes und angetriebenes Rad 16, dessen Ausrichtung durch die Deichsel 18 vorgebbar ist.

Das in Fig. 1 dargestellte Fahrzeug besitzt eine an dem Antriebsteil 14 des Fahrzeugs angebrachte Fahrzeugfunkeinheit 20, das mit einer Funkbedieneinheit 22 in Funkverbindung steht. Die Funkbedieneinheit ist in Fig. 1 schematisch mit zwei Bedienelementen 24 und 26 ausgerüstet. Wird ein Bedienelement an der Funkbedieneinheit betätigt, so wird ein entsprechendes Betätigungssignal von der Funkbedieneinheit 22 gesendet und durch die Fahrzeugfunkeinheit empfangen. Das empfangene Betätigungssignal wird an eine Fahrzeugsteuerung weitergeleitet. Ferner ist in Fig. 1 eine optische Anzeigeeinheit 28 zu erkennen, die durch ein Leucht- oder Blinksignal gut sichtbar anzeigt, dass eine Funkverbindung zwischen der Fahrzeugfunkeinheit 20 und der tragbaren Funkbedieneinheit 22 aufgebaut wurde. Auch kann über die Anzeigeeinheit angezeigt werden, dass ein Signal empfangen wurde.

Fig. 2 zeigt mit Ansicht b.) eine Draufsicht auf eine Funkbedieneinheit 30, während a.) und c.) Ansichten von der Seite zeigen. Ansicht d.) zeigt eine Ansicht auf die Stirnansicht.

Ansicht b.) zeigt eine Funkbedieneinheit mit einem länglichen, im Wesentlichen rechteckigen Gehäuse 32. Das Gehäuse 32 besitzt einen kopfseitigen Abschnitt 34 und einen breiteren Rumpfabschnitt 36. Im Rumpfabschnitt 36 sind seitlich zwei Taster 38 und 40 vorgesehen. Jeder der Taster ist unabhängig voneinander durch eine Druckbewegung betätigbar.

Auf einer Flachseite in Fig. 2b ist ein abgesenkter Bereich 42 vorgesehen, der an seinem kopfseitigen Ende einen Taster 44 und an seinem rumpfseitigen Ende einen zweiten Taster 46 besitzt. Diese Taster lösen bei Betätigung das Senden zugehöriger Signale aus, welche in der Fahrzeugsteuerung zur Auslösung verschiedener Fahrzeugfunktionen umgesetzt werden, beispielhaft heben und senken des Lastaufnahmemittels. Der rumpfseitige Taster 46 ist über eine Tastschwelle 48 von dem übrigen abgesenkten Bereich 42 getrennt. Mithilfe der Tastschwelle 48 kann sich der Benutzer orientieren und die Taster 44 und 46 zwischen einander unterscheiden. In dem Bereich zwischen der Tastschwelle 48 und dem Taster 44 ist eine Bedienfläche 50 vorgesehen. Die Bedienfläche 50 ist starr in dem Gehäuse und in dem abgesenkten Bereich 42 ausgebildet. Die Normalenrichtung der Bedienfläche 50 weist in Z-Richtung, wie das hilfsweise eingezeichnete Koordinatensystem zeigt.

In den Seitenansichten a.) und c.) sind die Taster 38 und 40 zu erkennen. Jeder der Taster 38, 40 besitzt einen sich in Längsrichtung auf dem Taster erstreckenden Tastvorsprung 52, 54, mit dem blind die Position der Taster erfühlt werden kann. Am kopfseitigen Ende der Seitenabschnitte ist in der Seitenansicht a.) eine LED als Leuchtmittel zu erkennen. Auf der gegenüberliegenden Seite c.) ist ein Nothalt-Taster 57 positioniert. Über den Nothalt-Taster kann sofort ohne zeitliche Verzögerung die Fahrt des Flurförderzeugs gestoppt werden.

In der stirnseitigen Ansicht d.) sind sechs elektrische Anschlüsse vorgesehen. Die Anschlüsse können beispielsweise vorgesehen sein, um eine in der Funkbedieneinheit vorgesehene Batterie zu laden. Andere Anschlüsse können zusätzlich dazu vorgesehen sein, weitere Befehle für eine in der Funkbedieneinheit vorgesehene Sendeeinheit zu erzeugen. Die sechs Anschlüsse 58a - 58f können einzeln oder in einer entsprechenden Steckverbinderbuchse vorgesehen sein.

Die Bedienung der Funkbedieneinheit 30 erfolgt beispielsweise durch zweimaliges Tippen mit der flachen Hand, der Fingerinnenseite oder einer Fingerspitze auf die Bedienfläche 50. Durch jedes Tippen auf die Bedienfläche 50 erfolgt ein Impulsübertrag, der von einem innenliegenden Beschleunigungssensor erfasst wird und als Impulsübertrag auf die Bedienfläche ein entsprechendes Sendesignal erzeugt. Der Impulsübertrag auf die Bedienfläche erfolgt bevorzugt in Richtung der Z-Achse, also in Normalenrichtung der Bedienfläche 50. An der Bedienfläche 50 kann beispielsweise zwischen einem Doppel- und einem Dreifach-Impulsübertrag unterschieden werden, um entsprechende Signale per Funk an das gesteuerte Flurförderzeug zu senden.

Das Flurförderzeug fährt dann beispielweise eine definierte Strecke, deren Länge parametrierbar ist. Dazu können beispielweise entsprechende Parameter in der Software der Steuerung vorgesehen sein, die einstellbar sind.

### Bezugszeichenliste

- 10: Niederhubfahrzeug
- 12: Lastteil
- 13: Lastarme
- 13': Lastarme
- 14: Antrieb steil
- 16: angetriebenes Rad
- 18: Deichsel
- 20: Fahrzeugfunkeinheit
- 22: Funkbedieneinheit
- 24: Bedienelement
- 26: Bedienelement
- 28: Anzeigeeinheit
- 30: Funkbedieneinheit
- 32: Gehäuse
- 34: Kopfabschnitt
- 36: Rumpfabschnitt
- 38: Taster
- 40: Taster
- 42: abgesenkter Bereich
- 44: Taster
- 46: Taster
- 48: Tastschwelle
- 50: Bedienfläche
- 52: Tastvorsprung
- 54: Tastvorsprung
- 56: LED
- 57: Nothalt-Taster
- 58a-f: Anschlüsse

## Patentansprüche

1. Verfahren zur Steuerung eines mit einer Fahrzeugfunkeinheit (20) ausgestatteten Flurförderzeugs (10) über eine tragbare und zum Senden von Signalen an die Fahrzeugfunkeinheit ausgelegte Funkbedieneinheit, (22) die eine Sendeeinheit, ein mit mindestens einer Bedienfläche (50) ausgestattetes Gehäuse (32) und einen in dem Gehäuse angeordneten Beschleunigungssensor mit mindestens einer Messachse aufweist, in deren Richtungen eine Beschleunigung erfasst werden kann, wobei das Verfahren folgende Schritte umfasst:
- Erkennen eines Impulsübertrags auf die Bedienfläche dann, wenn eine Beschleunigung ganz oder teilweise in einer Richtung erfasst wird und eine Amplitude der erkannten Beschleunigung ihr Vorzeichen wechselt,
- Weiterleiten des erkannten Impulsübertrags als ein Signal an die Sendeeinheit der Funkbedieneinheit und
- Senden des weitergeleiteten Signals von der Sendeeinheit an die Fahrzeugfunkeinheit.

2. Verfahren nach Anspruch 1, **dadurch gekennzeichnet, dass** der Impulsübertrag auf die Bedienfläche erkannt wird, wenn die Amplitude der erkannten Beschleunigung in mindestens einer Richtung der Messachse einen ersten vorbestimmten Mindestwert überschreitet.

3. Verfahren nach Anspruch 2, **dadurch gekennzeichnet, dass** der Impulsübertrag auf die Bedienfläche erkannt wird, wenn die Amplitude in Normalenrichtung der Bedienfläche einen zweiten vorbestimmten Mindestwert überschreitet.

4. Verfahren nach Anspruch 3, **dadurch gekennzeichnet, dass** der Impulsübertrag auf die Bedienfläche erkannt wird, wenn die Amplitude in Normalenrichtung der Bedienfläche den zweiten Mindestwert überschreitet und die Amplitude in mindestens einer weiteren Richtung einen vorbestimmten dritten Minimalwert nicht überschreitet.

5. Verfahren nach einem der vorangegangenen Ansprüche, **dadurch gekennzeichnet, dass** bei einem einzelnen Implusübertrag auf die Bedienfläche ein zugeordnetes Einzelsignal an die Fahrzeugfunkeinheit gesendet wird.

6. Verfahren nach einem der vorangegangenen Ansprüche, **dadurch gekennzeichnet, dass** bei zwei Impulstüberträgen auf die Bedienfläche, die um weniger als eine vorbestimmte Zeitspanne auseinander liegen, ein zugeordnetes Doppelsignal an die Fahrzeugfunkeinheit gesendet wird.

7. Verfahren nach einem der vorangegangenen Ansprüche, **dadurch gekennzeichnet, dass** bei drei oder mehr Impulsüberträgen auf die Bedienfläche deren zeitlicher Abstand jeweils eine vorgegebene Mindestzeitspanne nicht überschreitet, ein zugeordnetes Triplesignal oder ein Signal höherer Ordnung an die Fahrzeugfunkeinheit gesendet wird.

8. Verfahren nach einem der vorangegangenen Ansprüche, **dadurch gekennzeichnet, dass** die empfangenen Signale der Funkbedieneinheit von der Fahrzeugfunkeinheit an die Fahrzeugsteuerung weitergeleitet werden.

9. Flurförderzeug (10) mit einer Fahrzeugfunkeinheit (20) und einer tragbaren und zum Senden von Signalen an die Fahrzeugfunkeinheit (20) ausgebildeten Funkbedieneinheit (22), die eine Sendeeinheit, ein mit mindestens einer Bedienfläche (50) ausgestattetes Gehäuse (32) und einen Beschleunigungssensor aufweist, der mindestens eine Messachse besitzt, in deren Richtung eine Beschleunigung sensiert werden kann, wobei der Beschleunigungssensor mit dem Gehäuse (32) verbunden ist und ein Impulsübertrag auf die Bedienfläche (50) eine Beschleunigung ganz oder teilweise in Richtung der Messachse bewirkt und ein sensiertes Signal an die Sendeeinheit weiterleitet, sowie an die Fahrzeugfunkeinheit (20) sendet, **dadurch gekennzeichnet, dass** ein Impulsübertrag auf die Bedienfläche (50) vorliegt, wenn die Amplitude der sensierten Signale ihr Vorzeichen wechselt.

10. Flurförderzeug nach Anspruch 9, **dadurch gekennzeichnet, dass** der Beschleunigungssensor einen Impulsübertrag auf die Bedienfläche (50) erkennt, wenn die Amplitude des Beschleunigungssensors in der Messachsen einen vorbestimmten Minimalwert überschreitet.

11. Flurförderzeug nach einem der Ansprüche 9 bis 10, **dadurch gekennzeichnet, dass** der Beschleunigungssensor als ein drei-dimensionaler Beschleunigungssensor für 6 Freiheitsgrade ausgebildet ist.

12. Flurförderzeug nach einem der Ansprüche 9 bis 11, **dadurch gekennzeichnet, dass** ein Impulsübertrag auf die Bedienfläche (50) vorliegt, wenn die Amplitude in Normalenrichtung der Bedienfläche (50) einen ersten vorbestimmten Mindestwert überschreitet.

13. Flurförderzeug nach einem der Ansprüche 9 bis 12, **dadurch gekennzeichnet, dass** ein Impulsübertrag auf die Bedienfläche (50) vorliegt, wenn die Amplitude in Normalenrichtung der Bedienfläche (50) einen zweiten Mindestwert überschreitet und die Amplitude in mindestens einer weiteren Richtung kleiner als ein dritter Mindestwert ist.

14. Flurförderzeug nach einem der Ansprüche 9 bis 13, **dadurch gekennzeichnet, dass** die Sendeeinheit bei einem Impulsübertrag auf die Bedienfläche (50) mit einem zugeordneten Signal an die Fahrzeugfunkeinheit sendet.

15. Flurförderzeug nach einem der Ansprüche 9 bis 14, **dadurch gekennzeichnet, dass** ein Doppel-Impulsübertrag auf die Bedienfläche vorliegt, wenn zwei Impulsüberträge auf die Bedienfläche um nicht mehr als eine vorbestimmte Zeitspanne auseinanderliegen, wobei die Sendeeinheit bei einem Doppel-Impulsübertrag ein zugeordnetes Doppelsignal an die Fahrzeugfunkeinheit sendet.

16. Flurförderzeug nach einem der Ansprüche 9 bis 15, **dadurch gekennzeichnet, dass** die Funkbedieneinheit eine Bedienfläche und mindestens ein Paar von Tastern aufweist.

17. Flurförderzeug nach Anspruch 16, **dadurch gekennzeichnet, dass** die Funkbedieneinheit ein zugeordnetes Funksignal sendet, wenn beide Taster gleichzeitig betätigt sind.

18. Flurförderzeug nach einem der vorangegangenen Ansprüche, **dadurch gekennzeichnet, dass** das Gehäuse zwei Flachseiten aufweist, wobei die Bedienfläche auf einer ersten Flachseite angeordnet ist.

19. Flurförderzeug nach einem der Ansprüche 9 bis 18, **dadurch gekennzeichnet, dass** auf der ersten Flachseite mindestens ein Taster vorgesehen ist, dessen Betätigungsweg und/oder Betätigungskraft derart bestimmt sind, dass ein Impulsübertrag auf die Bedienfläche kein unbeabsichtigtes Betätigen des Tasters bewirkt.

20. Flurförderzeug nach Anspruch 19, **dadurch gekennzeichnet, dass** bei einem Drücken des mindestens einen Tasters kein Impulsübertrag auf die Bedienfläche erfolgt.

21. Flurförderzeug nach einem der Ansprüche 9 bis 20, **dadurch gekennzeichnet, dass** an dem Gehäuse ein Anschluss für einen elektrischen Steckverbinder vorgesehen ist.

22. Flurförderzeug nach einem der Ansprüche 9 bis 21, **dadurch gekennzeichnet, dass** die Funkbedieneinheit über ein Bluetooth-Protokoll Daten an die Fahrzeugfunkeinheit sendet.

## Claims

1. A method to control an industrial truck (10) equipped with a vehicle radio unit (20) via a portable radio control unit (22) which is designed to send signals to the vehicle radio unit and which comprises a sending unit, a casing (32) equipped with at least one control panel (50) and with an acceleration sensor arranged within the casing, having at least one measurement axis in the direction of which an acceleration can be detected, the method comprising the following steps:
• recognizing the transmission of a pulse to the control panel then when an acceleration is detected completely or partially into one direction and an amplitude of the detected acceleration changes its algebraic sign,
• forwarding the detected pulse transmission as a signal to the sending unit of the radio control unit, and
• sending the forwarded signal from the sending unit to the vehicle radio unit.

2. The method according to claim 1, **characterised in that** the pulse transmission to the control panel is recognized when the amplitude of the recognized acceleration in at least one direction of the measurement axis exceeds a first predefined minimum value.

3. The method according to claim 2, **characterised in that** the pulse transmission to the control panel is recognized when the amplitude of the recognized acceleration in the normal direction onto the control panel exceeds a second predefined minimum value.

4. The method according to claim 3, **characterised in that** the pulse transmission to the control panel is recognized when the amplitude of the recognized acceleration in the normal direction onto the control panel exceeds the second minimum value, and the amplitude in at least one further direction does not exceed a predefined third minimum value.

5. A method according to one of the preceding claims, **characterised in that** upon one single pulse transmission onto the control panel, an associated single signal is sent to the vehicle radio unit.

6. A method according to one of the preceding claims, **characterised in that** upon two pulse transmissions onto the control panel, which are far from each other for less than a predefined time period, an associated double signal is sent to the vehicle radio unit.

7. A method according to one of the preceding claims, **characterised in that** upon three or more pulse transmissions onto the control panel, whose distance in time does not exceed a predefined minimum time period in each case, an associated triple signal or a signal of higher order is sent to the vehicle radio unit.

8. A method according to one of the preceding claims, **characterised in that** the received signals of the radio control unit are forwarded to the vehicle control by the vehicle radio unit.

9. An industrial truck (10) with a vehicle radio unit (20) and a portable radio control unit (22) which is designed to send signals to the vehicle radio unit (20) and which comprises a sending unit, a casing (32) equipped with at least one control panel (50) and an acceleration sensor which has at least one measurement axis, in the direction of which an acceleration can be sensed, wherein the acceleration sensor is connected to the casing (32) and a pulse transmission to the control panel (50) causes an acceleration entirely or partially in the direction of the measurement axis and forwards a sensed signal to the sending unit and sends it to the vehicle radio unit (20), **characterised in that** there is a pulse transmission to the control panel (50) when the amplitude of the sensed signals changes its algebraic sign.

10. The industrial truck according to claim 9, **characterised in that** the acceleration sensor recognizes a pulse transmission to the control panel (50) when the amplitude of the acceleration sensor in the measurement axes exceeds a predefined minimum value.

11. An industrial truck according to one of the claims 9 to 10, **characterised in that** the acceleration sensor is designed as a three-dimensional acceleration sensor for 6 degrees of freedom.

12. An industrial truck according to one of the claims 9 to 11, **characterised in that** there is a pulse transmission to the control panel (50) when the amplitude in the normal direction onto the control panel (50) exceeds a first predefined minimum value.

13. An industrial truck according to one of the claims 9 to 12, **characterised in that** there is a pulse transmission to the control panel (50) when the amplitude in the normal direction onto the control panel (50) exceeds a second minimum value and the amplitude in at least one further direction is smaller than a third minimum value.

14. An industrial truck according to one of the claims 9 to 13, **characterised in that** upon a pulse transmission to the control panel (50), the sending unit sends with an associated signal to the vehicle radio unit.

15. An industrial truck according to one of the claims 9 to 14, **characterised in that** there is a double pulse transmission to the control panel when two pulse transmissions to the control panel are far from each other for less than a predefined time period, wherein the sending unit sends an associated double signal to the vehicle radio unit at a double pulse transmission.

16. An industrial truck according to one of the claims 9 to 15, **characterised in that** the radio control unit comprises a control panel and at least one pair of push buttons.

17. The industrial truck according to claim 16, **characterised in that** the radio control unit sends an associated radio signal when both push buttons are actuated simultaneously.

18. An industrial truck according to one of the preceding claims, **characterised in that** the casing has two flat sides, wherein the control panel is located on a first flat side.

19. An industrial truck according to one of the claims 9 to 18, **characterised in that** at least one push button is provided on the first flat side, whose actuation path and/or actuation force is defined such that a pulse transmission to the control panel does not cause an unintended actuation of the push button.

20. The industrial truck according to claim 19, **characterised in that** no pulse transmission to the control panel occurs when the at least one push button is pushed.

21. An industrial truck according to one of the claims 9 to 20, **characterised in that** a port for an electric plug-in connector is provided on the casing.

22. An industrial truck according to one of the claims 9 to 21, **characterised in that** the radio control unit sends data to the vehicle radio unit via a bluetooth protocol.

## Revendications

1. Procède de contrôle d'un chariot de manutention (10) équipé d'une unité radio du véhicule (20) via une unité de commande à radio portable (22) qui est conçue à émettre des signaux à l'unité radio du véhicule et qui comporte une unité émettrice, un boîtier (32) équipé avec au moins un panneau de commande (50) et avec un capteur d'accélération arrangé au-dedans du boîtier, et ayant au moins un axe de mesure, dans la direction duquel une accélération peut être détectée, le procédé comportant les étapes suivantes:
• reconnaître la transmission d'une impulsion au panneau de commande lorsque une accélération est détectée entièrement ou partiellement dans une direction, et une amplitude de l'accélération reconnue change son signe algébrique,
• envoyer la transmission d'impulsion détectée comme un signal à l'unité émettrice de l'unité de commande à radio, et
• transmettre le signal transmis de l'unité émettrice à l'unité radio du véhicule.

2. Procédé selon la revendication 1, **caractérisé en ce que** la transmission d'impulsion au panneau de commande est reconnue quand l'amplitude de l'accélération reconnue dans au moins une direction de l'axe de mesure dépasse une première valeur minimale prédéfinie.

3. Procédé selon la revendication 2, **caractérisé en ce que** la transmission d'impulsion au panneau de commande est reconnue quand l'amplitude de l'accélération reconnue dans la direction normale au panneau de commande dépasse une deuxième valeur minimale prédéfinie.

4. Procédé selon la revendication 3, **caractérisé en ce que** la transmission d'impulsion au panneau de commande est reconnue quand l'amplitude de l'accélération reconnue dans la direction normale au panneau de commande dépasse la deuxième valeur minimale, et l'amplitude dans au moins une autre direction ne dépasse pas une troisième valeur minimale prédéfinie.

5. Procédé selon une des revendications précédentes, **caractérisé en ce que** chez une seule transmission d'impulsion au panneau de commande, un signal individuel associé est transmis à l'unité radio du véhicule.

6. Procédé selon une des revendications précédentes, **caractérisé en ce que** chez deux transmissions d'impulsion au panneau de commande, dont la distance en temps est moins qu'une durée de temps prédéfinie, un signal double associé est transmis à l'unité radio du véhicule.

7. Procédé selon une des revendications précédentes, **caractérisé en ce que** chez trois ou plus transmissions d'impulsion au panneau de commande, dont la distance en temps chaque fois ne dépasse pas une durée de temps minimale prédéfinie, un signal triple associé ou un signal d'un ordre supérieur est transmis à l'unité radio du véhicule.

8. Procédé selon une des revendications précédentes, **caractérisé en ce que** les signaux reçus de l'unité de commande à radio sont envoyés à la commande de véhicule par l'unité radio du véhicule.

9. Chariot de manutention (10) avec une unité radio du véhicule (20) et une unité de commande à radio portable (22) qui est conçue à émettre des signaux à l'unité radio du véhicule (20), qui comporte une unité émettrice, un boîtier (32) équipé d'au moins un panneau de commande (50) et un capteur d'accélération qui a au moins un axe de mesure, dans la direction duquel une accélération peut être sensée, le capteur d'accélération étant relié au boîtier (32) et une transmission d'impulsion au panneau de commande (50) produisant une accélération entièrement ou partiellement dans la direction de l'axe de mesure et envoyant à l'unité émettrice et émettant à l'unité radio du véhicule (20) un signal sensé, **caractérisé en ce que** il y a une transmission d'impulsion au panneau de commande (50) quand l'amplitude des signaux sensés change le signe.

10. Chariot de manutention selon la revendication 9, **caractérisé en ce que** le capteur d'accélération reconnaît une transmission d'impulsion au panneau de commande (50) quand l'amplitude du capteur d'accélération dans les axes de mesure dépasse une valeur minimale prédéfinie.

11. Chariot de manutention selon une des revendications 9 to 10, **caractérisé en ce que** le capteur d'accélération est conçu comme un capteur d'accélération à trois dimensions pour 6 degrés de liberté.

12. Chariot de manutention selon une des revendications 9 to 11, **caractérisé en ce que** il y a une transmission d'impulsion au panneau de commande (50) quand l'amplitude dans la direction normale au panneau de commande (50) dépasse une première valeur minimale prédéfinie.

13. Chariot de manutention selon une des revendications 9 to 12, **caractérisé en ce que** il y a une transmission d'impulsion au panneau de commande (50) quand l'amplitude dans la direction normale au panneau de commande (50) dépasse une deuxième valeur minimale et l'amplitude dans au moins une autre direction est plus petite qu'une troisième valeur minimale.

14. Chariot de manutention selon une des revendications 9 to 13, **caractérisé en ce que** chez une transmission d'impulsion au panneau de commande (50), l'unité émettrice émet à l'unité radio du véhicule avec un signal associé.

15. Chariot de manutention selon une des revendications 9 to 14, **caractérisé en ce que** il y a une transmission d'impulsion double au panneau de commande quand deux transmissions d'impulsion au panneau de commande ont une distance en temps non plus qu'une durée de temps prédéfinie, l'unité émettrice émettant un double signal associé à l'unité radio du véhicule chez une double transmission d'impulsion.

16. Chariot de manutention selon une des revendications 9 to 15, **caractérisé en ce que** l'unité de commande à radio comporte un panneau de commande et au moins une paire de boutons poussoirs.

17. Chariot de manutention selon la revendication 16, **caractérisé en ce que** l'unité de commande à radio émet un signal radio associé quand les deux boutons poussoirs sont activés au même temps.

18. Chariot de manutention selon une des revendications précédentes, **caractérisé en ce que** le boîtier a deux surfaces plates, le panneau de commande étant arrangé sur une première surface plate.

19. Chariot de manutention selon une des revendications 9 to 18, **caractérisé en ce que** au moins un bouton poussoir est prévu dans la première surface plate, dont le chemin d'activation et/ou la force d'activation sont définies tellement qu'une transmission d'impulsion au panneau de commande n'induit pas une activation involontaire du bouton poussoir.

20. Chariot de manutention selon la revendication 19, **caractérisé en ce que** il ne sera pas aucune transmission d'impulsion au panneau de commande quand l'au moins un bouton poussoir est poussé.

21. Chariot de manutention selon une des revendications 9 to 20, **caractérisé en ce que** un port pour un connecteur électrique enfichable est prévu sur le boîtier.

22. Chariot de manutention selon une des revendications 9 to 21, **caractérisé en ce que** l'unité de commande à radio émet des données à l'unité radio du véhicule via un protocole bluetooth.
